# EUROPEAN PATENT SPECIFICATION

(11) **EP 3 855 027 B1**
(45) Date of publication and mention of the grant of the patent: **15.11.2023**
(21) Application number: 20152776.9
(22) Date of filing: 21.01.2020
(51) Int. Cl.: F16B 25/00, F16B 25/10

(54) **SCREW WITH HOLE-ENLARGING PORTION**
SCHRAUBE MIT LOCHVERGRÖSSERUNGSABSCHNITT
VIS COMPORTANT UNE PARTIE SERVANT À ÉLARGIR LES TROUS

(43) Date of publication of application: 28.07.2021
(73) Proprietor: Hsu, Kuo-Tai, Tainan City 710 (TW); Hsu, Ming-Hao, 710 Tainan City (TW)
(72) Inventor: Hsu, Kuo-Tai, Tainan City 710 (TW); Hsu, Ming-Hao, 710 Tainan City (TW)
(74) Representative: Jannig & Repkow Patentanwälte PartG mbB

(56) References cited:
- EP-A1- 3 379 092
- US-A- 3 827 331
- US-A- 6 106 208
- US-A1- 2015 322 989
- US-A1- 2016 061 247
- US-B2- 8 926 249

## Description

### BACKGROUND OF THE INVENTION

### 1. Field of the Invention

The present invention relates to a screw and, more particularly, to a screw with a hole-enlarging portion.

### 2. Description of the Related Art

A hole expanding screw as disclosed in the US Patent No. US9,850,935 includes a screw head and a screw shank. The screw head includes a top and a neck extending from the top. The screw shank includes a shank body connected with the neck, a hole expanding portion connected with the shank body, a cone connected with the hole expanding portion, and a thread running helically from the cone through the hole expanding portion to the shank body. The outer diameter of the hole expanding portion is greater than the diameter of the shank body and smaller than the diameter of the thread. The hole expanding portion includes a plurality of hole expanding blocks arranged in rows and a plurality of debris exhaust channels among the hole expanding blocks, wherein two neighboring rows of the hole expanding blocks are arranged in a staggered way. Accordingly, when the hole expanding screw is being screwed in a workpiece, a hole with a diameter greater than the diameter of the shank body but less than the diameter of the thread is drilled by the hole expanding blocks such that the hole expanding screw keeps moving inside the workpiece easily with debris generated by the hole expanding portion expelled through the debris exhaust channels to prevent the debris from accumulating and cracking the workpiece.

However, the issues of high resistance and poor debris removals in the course of the hole expanding screw driven into the workpiece still exist. Specifically, when the hole expanding screw is being driven into a hole, a stronger torsion should be applied to the hole expanding portion with a circular cross section, which increases a contact area between the hole expanding portion and a hole wall of the hole. Moreover, more debris will be generated at a position at which the hole expanding portion with a larger cutting area is screwed in the workpiece. When excessive debris is accumulated in the guiding path of the thread with which the hole expanding portion is screwed in the workpiece, some debris will block off space between the thread and the workpiece, hindering the advancement of the screw shank in the hole and causing the screw to be jammed in the workpiece. Furthermore, a crack is generated on the squeezed workpiece in which the screw shank is hardly or slowly driven inside the hole.

Documents EP 3379092, US 3827331, US 6106208, US 8926249, US 2015/0322989, and US 2016/0061247 are documents reflecting the relevant background art. EP 3379092 describes a screw with cutting teeth, wherein a plurality of spaced ribs is provided on a rear section of a shank of the screw, and an outer diameter defined by the ribs is greater than the stem diameter of the rear section for easy driving of the rear section into workpieces. These documents do, however, not provide a satisfactory solution of the above mentioned problems.

### BRIEF SUMMARY OF THE INVENTION

It is an objective of the present invention to provide a screw with a hole-enlarging portion through which hole reaming and chip stirring are promoted effectively for easier operation, better chip stirring and faster screw-in speed of the screw that is being driven into a workpiece.

To achieve this and other objectives, a screw of the present invention is provided according to claim 1.

In an embodiment, the screw further includes a screw-in portion designed at a tail end of the shank. The shank includes a front section and a rear section spaced from the front section along the longitudinal axis. The front section is situated between the rear section and the screw-in portion, and the hole-enlarging portion is designed at the front section of the shank and adjacent to the screw-in portion.

In an embodiment, the hole-enlarging portion is situated between the first thread and the screw-in portion, and a second thread is formed on the screw-in portion. Each inclined edge has a top end spaced from or extending to the first thread and has a bottom end spaced from or extending to the second thread of the screw-in portion.

In an embodiment, the screw-in portion is a drilling tail end with cutting edges. Each inclined edge has a top end spaced from or extending to the first thread and has a bottom end spaced from or extending to the cutting edges of the drilling tail end.

In an embodiment, two adjacent inclined edges are spaced 120 degrees apart along the circumferential direction of the shank.

In an embodiment, the guiding slope is an inward recess through which a discharging groove is formed.

The present invention will become clearer in light of the following detailed description of illustrative embodiments of this invention described in connection with the drawings.

### DESCRIPTION OF THE DRAWINGS

FIG 1 is a perspective view of a screw according to a first embodiment of the present invention.
FIG 2 is a plane view of the screw in FIG 1.
FIG 3 is a sectional view taken along line 3-3 of FIG 2.
FIG 4 is a sectional view taken along line 4-4 of FIG 2.
FIG 5 is a partial enlarged view of the screw in FIG 2.
FIG 6 is a plane view of a screw according to a second embodiment of the present invention.
FIG 7 is a sectional view taken along line 7-7 of FIG 6.

### DETAILED DESCRIPTION OF THE INVENTION

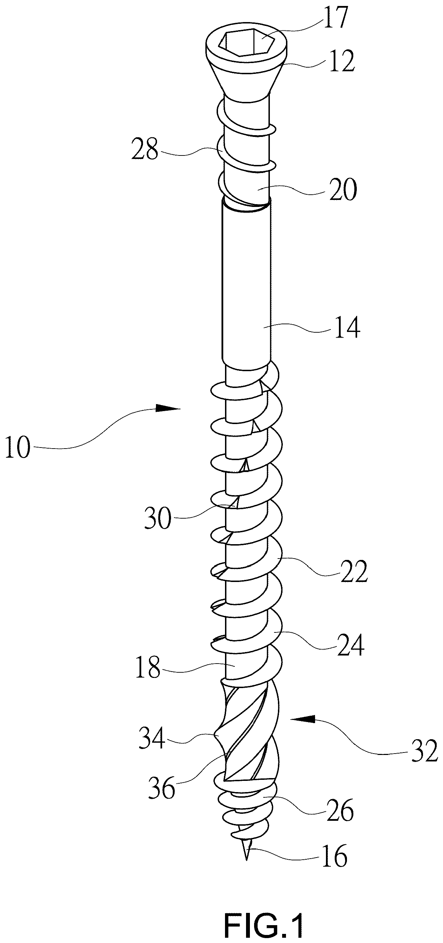

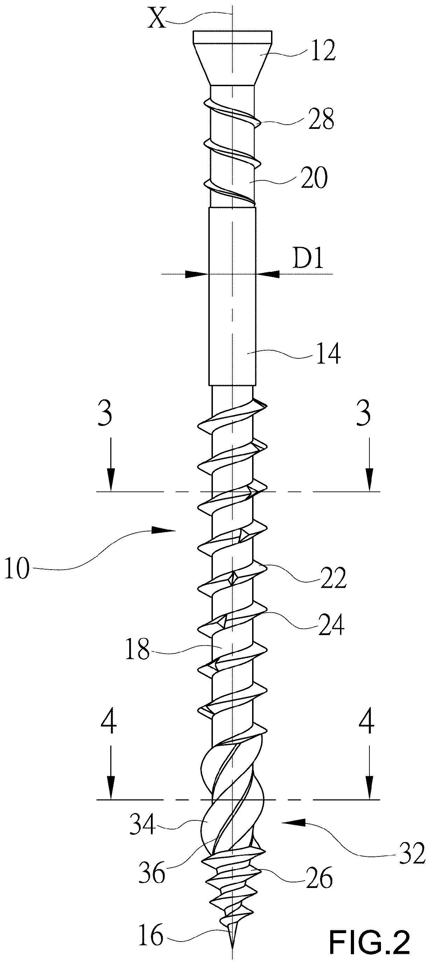

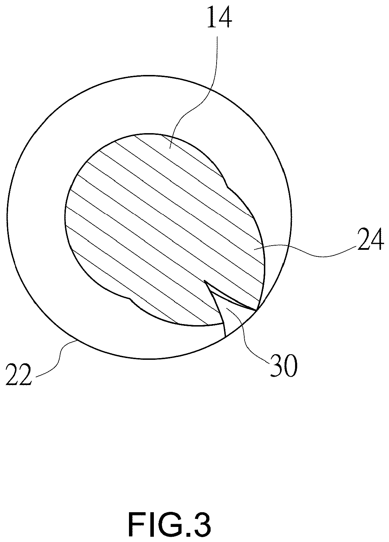

A screw 10 according to a first embodiment of the present invention is shown in FIGS. 1 through 5 of the drawings and includes a head 12, a shank 14 extending from a lower end of the head 12, and a screw-in portion 16 formed at a tail end of the shank 14. A socket 17 is disposed in an upper surface of the head 12 for a tool (not shown) to insert into for driving the screw 10 to rotate. The shank 14 defines a longitudinal axis X and includes a front section 18 and a rear section 20 spaced from the front section 18 along the longitudinal axis X and connected to the head 12. The front section 18 is situated between the rear section 20 and the screw-in portion 16. The shank 14 features a circular transverse section at which a shank diameter D1 is defined. At least one thread is provided on the shank 14. In this embodiment, the shank 14 is provided with a first thread 22 located at the front section 18 and including a plurality of first thread convolutions 24 from which a major diameter D2 greater than the shank diameter D1 is defined based on their crest. The first thread 22 is a right-hand thread slantwise upward extending from left to right. The screw-in portion 16 is a sharp tail around which a second thread 26 is formed, In a feasible embodiment, the screw-in portion 16 may be a drilling tail end with cutting edges (not shown in figures). In this embodiment, the shank 14 is further provided with a third thread 28 located at the rear section 20 and featuring a direction of upward helix contrary to a direction of upward helix of the first thread 22. The first thread convolutions 24 are provided with notches 30 from which remnant chips are guided.

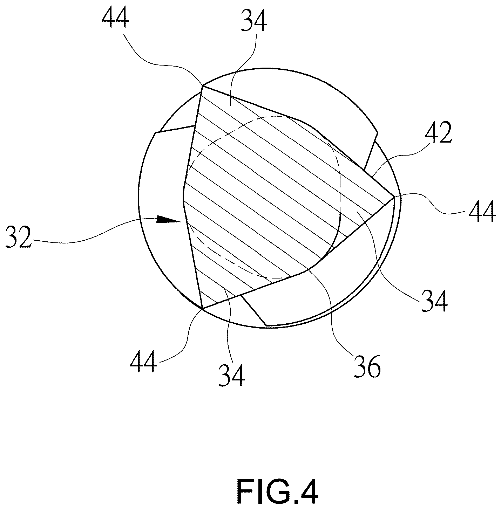

The screw 10 is characteristic of the shank 14 on which an unthreaded hole-enlarging portion 32 with an approximately triangular transverse section is designed (see FIG 4). The hole-enlarging portion 32 includes three inclined edges 34 spaced from one another along a circumferential direction of the shank 14 for development of an approximately triangular sectional profile at the hole-enlarging portion 32. Two adjacent inclined edges 34 are spaced 120 degrees apart along the circumferential direction of the shank 14 for development of a guiding slope 36 therebetween. In a feasible embodiment, the guiding slope 36 is an inclined plane or an inward recess through which a discharging groove is formed.

Each inclined edge 34 extends obliquely toward the head 12 relative to a horizontal axis H perpendicular to the longitudinal axis X for development of a helix segment. The upward direction in which each inclined edge 34 extends toward the head 12 is identical to the upward direction (from left to right) in which the first thread 22 extends toward the head 12. A tilt angle (A1) at which each inclined edge 34 extends toward the head 12 is greater than a tilt angle (A2) at which the first thread 22 extends toward the head 12.

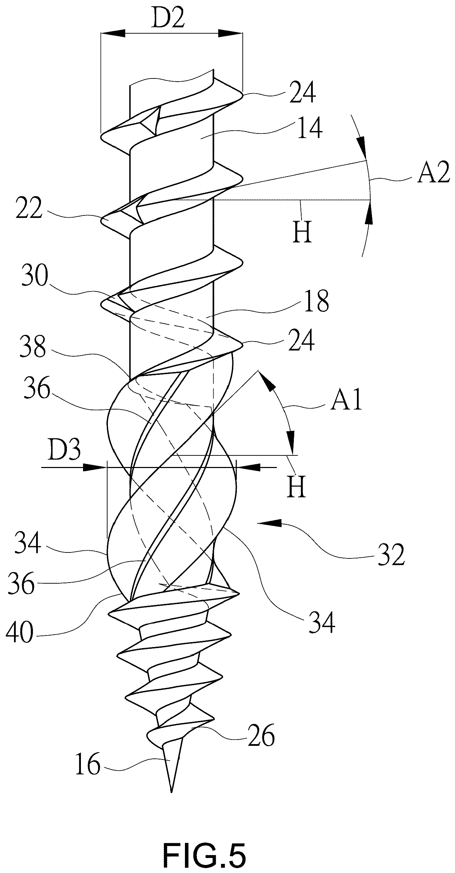

In this embodiment, the hole-enlarging portion 32 is designed at the front section 18 of the shank 14 and situated between the first thread 22 and the screw-in portion 16 (see FIG 5). Each inclined edge 34 has a top end 38 extending to the first thread convolution 24 at the lowest end of the first threads 22 and has a bottom end 40 extending to the second thread 26 of the screw-in portion 16. Each inclined edge 34 with a triangular transverse section has two lateral sides 42 and a blade-like outer edge 44 connecting the lateral sides 42 (see FIG 4). The three inclined edges 34 define an edge top diameter D3 based on their edge tops, and the edge top diameter D3 is greater than the shank diameter D1 but slightly less than or equal to the major diameter D2.

In practice, the screw 10 based on the screw-in portion 16 as an anchor point for cutting is inserted into a workpiece (not shown in figures). With the head 12 driven to rotate by a tool, the workpiece is cut and drilled by the second thread 26 at the screw-in portion 16 for creating a hole. The hole wall inside the hole is cut and reamed by the inclined edges 34 at the hole-enlarging portion 32. Remnant chips generated from the enlarged hole are guided and removed upward along the guiding slopes 36 such that the following first thread 22 is screwed in the workpiece smoothly for higher screw-in speed and easy operation.

Because the hole-enlarging portion 32 which is being screwed in the enlarged hole is a non-threaded portion but characteristic of a triangular transverse section, remnant chips cut by both the screw-in portion 16 and the inclined edges 34 are removed smoothly and guided upward through the guiding slopes 36 without restriction or resistance and filled in gaps between the shank 14 and the hole wall uniformly for effective reaming and chip stirring, faster screw-in speed of the screw 10, and fewest cracks on the squeezed workpiece. Moreover, because the inclined edges 34 at the hole-enlarging portion 32 are spaced 120 degrees apart along the circumferential direction of the shank 14, the screw 10, which is being screwed in the workpiece and sustaining stresses distributed unevenly, still moves in the screw-in direction corrected by the three inclined edges 34 for neither sway nor deflection of the first thread 22 simultaneously, easy operation and better occlusion of the screw 10 in the workpiece.

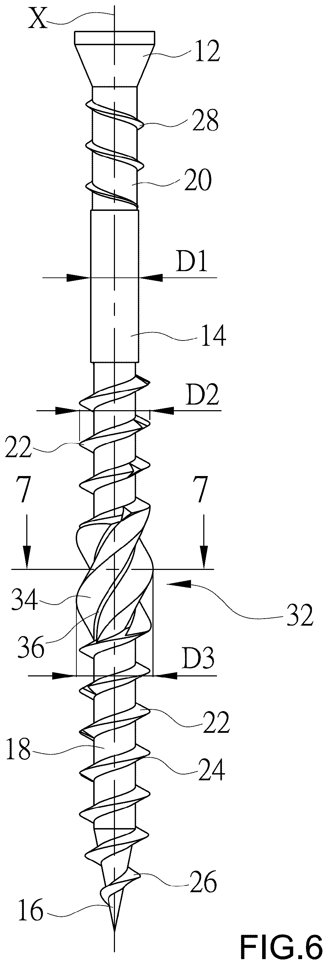

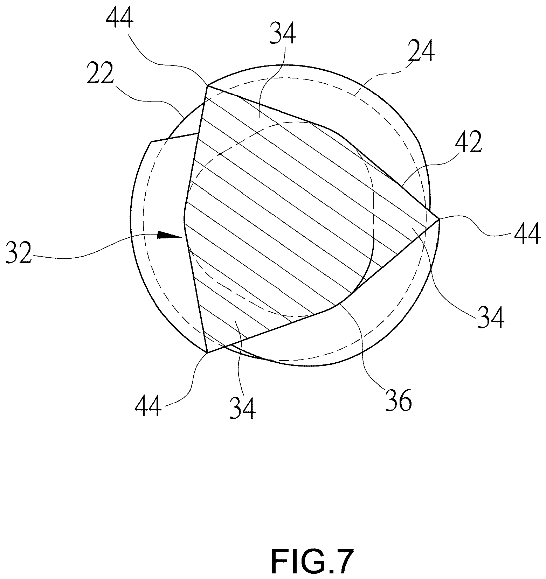

FIG 6 and FIG 7 illustrate a screw 10 according to a second embodiment of the present invention modified from the first embodiment. In this embodiment, the hole-enlarging portion 32 is designed at the middle segment of the shank 14, and the edge top diameter D3 is slightly greater than the major diameter D2. It should be mentioned that the hole-enlarging portion 32 of the present invention is rolled from the shank 14 directly and manufactured easily for a controllable size of the edge top diameter D3 as required. When the screw 10 is used to fasten a workpiece moderately, the edge top diameter D3 can be greater than the major diameter D2. Accordingly, when a hole is enlarged by the inclined edges 34 at the hole-enlarging portion 32, both the first thread 22 and the third thread 28 on the shank 14 are screwed in the workpiece easily. In a feasible embodiment, the hole-enlarging portion 32 of the present invention can be designed at the rear section 20 of the shank 14, so that the head 12 can be more easily screwed into a workpiece.

The scope of the invention is to be indicated by the appended claims, rather than by the foregoing description, and all changes which come within the meaning of the claims are intended to be embraced therein.

## Claims

1. A screw (10) comprising:
a head (12);
a shank (14) extending from the head (12) and defining a longitudinal axis (X), with the shank (14) having a shank diameter (D1) and provided with a first thread (22) thereon, with the first thread (22) defining a major diameter (D2) greater than the shank diameter (D1); and
a hole-enlarging portion (32) designed on the shank (14) and featuring no thread thereon,
whereby the hole-enlarging portion (32) has an approximately triangular transverse section and is formed with three inclined edges (34) spaced from one another along a circumferential direction of the shank (14), with a guiding slope (36) defined between any two adjacent inclined edges (34) for development of an approximately triangular sectional profile at a circumference of the hole-enlarging portion (32), with the three inclined edges (34) defining an edge top diameter (D3) based on their edge tops and being greater than the shank diameter (D1), with each inclined edge (34) obliquely extending toward the head (12) relative to a horizontal axis (H) perpendicular to the longitudinal axis (X), with a direction in which each inclined edge (34) extends toward the head (12) being identical to a direction in which the first thread (22) extends toward the head (12), wherein a tilt angle (A1) at which each inclined edge (34) extends toward the head (12) is greater than a tilt angle (A2) at which the first thread (22) extends toward the head (12).

2. The screw (10) according to claim 1, further comprising:
a screw-in portion (16) designed at a tail end of the shank (14), with the shank (14) including a front section (18) and a rear section (20) spaced from the front section (18) along the longitudinal axis (X), with the front section (18) situated between the rear section (20) and the screw-in portion (16), with the hole-enlarging portion (32) designed at the front section (18) of the shank (14) and adjacent to the screw-in portion (16).

3. The screw (10) according to claim 2, wherein the hole-enlarging portion (32) is situated between the first thread (22) and the screw-in portion (16), with the screw-in portion (16) being a drilling tail end with cutting edges, with each inclined edge (34) having a top end (38) spaced from the first thread (22) and has a bottom end (40) spaced from the cutting edges of the drilling tail.

4. The screw (10) according to claim 2, wherein the hole-enlarging portion (32) is situated between the first thread (22) and the screw-in portion (16), with a second thread (26) formed on the screw-in portion (16), with each inclined edge (34) having a top end (38) spaced from the first thread (22) and a bottom end (40) spaced from the second thread (26) of the screw-in portion (16).

5. The screw (10) according to claim 2, wherein the hole-enlarging portion (32) is situated between the first thread (22) and the screw-in portion (16), with a second thread (26) formed on the screw-in portion (16), with each inclined edge (34) having a top end (38) extending to the first thread (22) and a bottom end (40) extending to the second thread (26) of the screw-in portion (16).

6. The screw (10) according to claim 1, wherein two adjacent inclined edges (34) are spaced 120 degrees apart along the circumferential direction of the shank (14).

7. The screw (10) according to claim 1, wherein the edge top diameter (D3) is slightly less than or equal to the major diameter (D2).

8. The screw (10) according to claim 1, wherein the edge top diameter (D3) is greater than the major diameter (D2).

9. The screw (10) according to claim 1, wherein the hole-enlarging portion (32) is rolled from the shank (14) directly.

10. The screw (10) according to claim 1, wherein the guiding slope (36) is an inward recess through which a discharging groove is formed.

## Patentansprüche

1. Schraube (10), Folgendes umfassend:
einen Kopf (12);
einen sich vom Kopf (12) erstreckenden und eine Längsachse (X) definierenden Schaft (14), wobei der Schaft (14) einen Schaftdurchmesser (D1) aufweist und mit einem ersten Gewinde (22) daran versehen ist, wobei das erste Gewinde (22) einen Hauptdurchmesser (D2) definiert, der größer ist als der Schaftdurchmesser (D1); und
einen Lochvergrößerungsabschnitt (32), der am Schaft (14) ausgestaltet ist und kein Gewinde daran aufweist,
wobei der Lochvergrößerungsabschnitt (32) einen in etwa dreieckigen Querschnitt aufweist und mit drei schrägen Kanten (34) ausgebildet ist, die entlang der Umfangsrichtung des Schafts (14) voneinander beabstandet sind, wobei eine Führungsschräge (36) zwischen zwei beliebigen angrenzenden schrägen Kanten (34) zur Entwicklung eines in etwa dreieckigen Querschnittsprofils am Umfang des Lochvergrößerungsabschnitts (32) definiert ist, wobei die drei schrägen Kanten (34) einen oberen Kantendurchmesser (D3) auf Grundlage ihrer Kantenoberseite definieren und größer sind als der Schaftdurchmesser (D1), wobei sich jede schräge Kante (34) in Bezug zu einer horizontalen Achse (H) senkrecht zur Längsachse (X) schräg zum Kopf (12) hin erstreckt, wobei eine Richtung, in die sich jede schräge Kante (34) zum Kopf (12) hin erstreckt, identisch zu der Richtung ist, in die sich das erste Gewinde (22) zum Kopf (12) hin erstreckt, wobei der Neigungswinkel (A1), in dem sich jede schräge Kante (34) zum Kopf (12) hin erstreckt, größer ist als der Neigungswinkel (A2), in dem sich das erste Gewinde (22) zum Kopf (12) hin erstreckt.

2. Schraube (10) nach Anspruch 1, ferner Folgendes umfassend:
einen Einschraubabschnitt (16), der an einem unteren Ende des Schafts (14) ausgestaltet ist, wobei der Schaft (14) einen Vorderabschnitt (18) und einen vom Vorderabschnitt (18) entlang der Längsachse (X) beabstandeten Hinterabschnitt (20) umfasst, wobei der Vorderabschnitt (18) zwischen dem Hinterabschnitt (20) und dem Einschraubabschnitt (16) angeordnet ist, wobei der Lochvergrößerungsabschnitt (32) am Vorderabschnitt (18) des Schafts (14) und an den Einschraubabschnitt (16) angrenzend ausgestaltet ist.

3. Schraube (10) nach Anspruch 2, wobei der Lochvergrößerungsabschnitt (32) zwischen dem ersten Gewinde (22) und dem Einschraubabschnitt (16) angeordnet ist, wobei der Einschraubabschnitt (16) ein Bohrendstück mit Schneidkanten ist, wobei jede schräge Kante (34) ein vom ersten Gewinde (22) beabstandetes oberes Ende (38) und ein von den Schneidkanten des Bohrendstücks beabstandetes unteres Ende (40) aufweist.

4. Schraube (10) nach Anspruch 2, wobei der Lochvergrößerungsabschnitt (32) zwischen dem ersten Gewinde (22) und dem Einschraubabschnitt (16) angeordnet ist, wobei ein zweites Gewinde (26) am Einschraubabschnitt (16) ausgebildet ist, wobei jede schräge Kante (34) ein vom ersten Gewinde (22) beabstandetes oberes Ende (38) und ein vom zweiten Gewinde (26) des Einschraubabschnitts (16) beabstandetes unteres Ende (40) aufweist.

5. Schraube (10) nach Anspruch 2, wobei der Lochvergrößerungsabschnitt (32) zwischen dem ersten Gewinde (22) und dem Einschraubabschnitt (16) angeordnet ist, wobei ein zweites Gewinde (26) am Einschraubabschnitt (16) ausgebildet ist, wobei jede schräge Kante (34) ein vom ersten Gewinde (22) beabstandetes oberes Ende (38) und ein sich zum zweiten Gewinde (26) des Einschraubabschnitts (16) erstreckendes unteres Ende (40) aufweist.

6. Schraube (10) nach Anspruch 1, wobei zwei angrenzende schräge Kanten (34) entlang der Umfangsrichtung des Schafts (14) um 120 Grad voneinander beabstandet sind.

7. Schraube (10) nach Anspruch 1, wobei der obere Kantendurchmesser (D3) etwas kleiner als der oder gleich dem Hauptdurchmesser (D2) ist.

8. Schraube (10) nach Anspruch 1, wobei der obere Kantendurchmesser (D3) größer als der Hauptdurchmesser (D2) ist.

9. Schraube (10) nach Anspruch 1, wobei der Lochvergrößerungsabschnitt (32) direkt aus dem Schaft (14) gerollt ist.

10. Schraube (10) nach Anspruch 1, wobei die Führungsschräge (36) eine nach innen gerichtete Aussparung ist, durch die eine Abgabenut ausgebildet ist.

## Revendications

1. Vis (10) comprenant :
une tête (12) ;
une tige (14) s'étendant à partir de la tête (12) et définissant un axe longitudinal (X), la tige (14) ayant un diamètre de tige (D1) et étant pourvue d'un premier filetage (22), le premier filetage (22) définissant un diamètre principal (D2) supérieur au diamètre de tige (D1) ; et
une partie servant à agrandir les trous (32) conçue sur la tige (14) et ne comportant pas de filetage,
moyennant quoi la partie servant à agrandir les trous (32) a une section transversale approximativement triangulaire et est formée de trois bords inclinés (34) espacés les uns des autres le long d'une direction circonférentielle de la tige (14), avec une pente de guidage (36) définie entre deux bords inclinés (34) adjacents pour développer un profil sectionnel approximativement triangulaire au niveau d'une circonférence de la partie servant à agrandir les trous (32), les trois bords inclinés (34) définissant un diamètre de sommet de bord (D3) basé sur leurs sommets de bord et étant plus grand que le diamètre de tige (D1), chaque bord incliné (34) s'étendant obliquement vers la tête (12) par rapport à un axe horizontal (H) perpendiculaire à l'axe longitudinal (X), la direction dans laquelle chaque bord incliné (34) s'étend vers la tête (12) étant identique à la direction dans laquelle le premier filetage (22) s'étend vers la tête (12), un angle d'inclinaison (A1) auquel chaque bord incliné (34) s'étend vers la tête (12) étant supérieur à un angle d'inclinaison (A2) auquel le premier filetage (22) s'étend vers la tête (12) .

2. Vis (10) selon la revendication 1, comprenant en outre :
une partie à visser (16) conçue à une extrémité arrière de la tige (14), la tige (14) comprenant une section avant (18) et une section arrière (20) espacée de la section avant (18) le long de l'axe longitudinal (X), la section avant (18) étant située entre la section arrière (20) et la partie à visser (16), la partie servant à agrandir les trous (32) étant conçue au niveau de la section avant (18) de la tige (14) et adjacente à la partie à visser (16).

3. Vis (10) selon la revendication 2, la partie servant à agrandir les trous (32) étant située entre le premier filetage (22) et la partie à visser (16), la partie à visser (16) étant une extrémité de queue de perçage ayant des bords coupants, chaque bord incliné (34) ayant une extrémité supérieure (38) espacée du premier filetage (22) et ayant une extrémité inférieure (40) espacée des bords coupants de la queue de perçage.

4. Vis (10) selon la revendication 2, la partie servant à agrandir les trous (32) étant située entre le premier filetage (22) et la partie à visser (16), un second filetage (26) étant formé sur la partie à visser (16), chaque bord incliné (34) ayant une extrémité supérieure (38) espacée du premier filetage (22) et une extrémité inférieure (40) espacée du second filetage (26) de la partie à visser (16).

5. Vis (10) selon la revendication 2, la partie servant à agrandir les trous (32) étant située entre le premier filetage (22) et la partie à visser (16), un second filetage (26) étant formé sur la partie à visser (16), chaque bord incliné (34) ayant une extrémité supérieure (38) s'étendant jusqu'au premier filetage (22) et une extrémité inférieure (40) s'étendant jusqu'au second filetage (26) de la partie à visser (16).

6. Vis (10) selon la revendication 1, deux bords inclinés (34) adjacents étant espacés de 120 degrés le long de la direction circonférentielle de la tige (14).

7. Vis (10) selon la revendication 1, le diamètre de sommet de bord (D3) étant légèrement inférieur ou égal au diamètre principal (D2).

8. Vis (10) selon la revendication 1, le diamètre de sommet de bord (D3) étant supérieur au diamètre principal (D2).

9. Vis (10) selon la revendication 1, la partie servant à agrandir les trous (32) étant roulée directement à partir de la tige (14).

10. Vis (10) selon la revendication 1, la pente de guidage (36) étant un évidement vers l'intérieur à travers lequel une rainure de décharge est formée.
